# EUROPEAN PATENT APPLICATION

(11) **EP 3 486 123 A1**
(43) Date of publication of application: **22.05.2019**
(21) Application number: 17207360.3
(22) Date of filing: 14.12.2017
(51) Int. Cl.: B60R 21/01

(54) **SYSTEM AND METHOD FOR DETECTING VEHICLE CRASH**

(30) Priority: 16.11.2017 US 201715814877
(71) Applicant: Sfara, Inc., Hoboken, NJ 07030 (US)
(72) Inventor: Simon, Sascha, Warwick, NY 10990 (US); Miluzzo, Emiliano, Madison, NJ 07940 (US)
(74) Representative: Otten, Roth, Dobler & Partner mbB Patentanwälte

(57) **Abstract**

A device includes: a mode-determining component operable to generate an in-vehicle signal when the device is within a vehicle; a triggering parameter detecting component that detects a triggering parameter associated with a vehicle crash at a first time to and generates a triggering detector signal based on the detected triggering parameter; and a position detecting component that detects a first position of the device at a second time *t₁,* generates a first position signal based on the first detected position, detects a second position of the device at a third time *t₂* and generates a second position signal based on the second detected position when the mode-determining component generates the in-vehicle signal and when the triggering parameter detecting component generates a triggering detector signal. The mode-determining component also generates a crash mode signal when the first position signal corresponds to the second position signal.

## Description

### BACKGROUND

Vehicle telematics is the technology of sending, receiving and storing information to and from vehicles and is generally present (at least to a limited extent) in the automotive marketplace today. For example, both General Motors (through their OnStar offering) and Mercedes Benz (through their Tele-Aid and more recent mbrace system offering) have long offered connected-vehicle functionality to their customers. Both of these offerings make use of the data available on a vehicle's CAN bus, which is specified in the OBD-II vehicle diagnostics standard. For example, the deployment of an airbag, which suggests that the vehicle has been involved in a crash, may be detected by monitoring the CAN bus. In this event, a digital wireless telephony module that is embedded in the vehicle and connected to the vehicle's audio system (i.e., having voice connectivity) can initiate a phone call to a telematics service provider (TSP) to "report" the crash. Vehicle location may also be provided to the TSP using the vehicle's GPS functionality. Once the call is established, the TSP representative may attempt to communicate with the vehicle driver, using the vehicle's audio system, to assess the severity of the situation. Assistance may thus be dispatched by the TSP representative to the vehicle as appropriate.

Historically, these services were focused entirely on driver and passenger safety. These types of services have expanded since their initial roll-out, however, and now offer additional features to the driver, such as concierge services. The services, however, remain mainly focused on voice based driver to call center communication, with data services being only slowly introduced, hindered by low bandwidth communication modules, high cost and only partial availability on some model lines.

As a result, while generally functional, vehicle telematics services have experienced only limited commercial acceptance in the marketplace. There are several reasons for this. In addition to low speeds and bandwidth, most vehicle drivers (perhaps excluding the premium automotive market niche) are reluctant to pay extra for vehicle telematics services, either in the form of an upfront payment (i.e., more expensive vehicle) or a recurring (monthly/yearly) service fee. Moreover, from the vehicle manufacturer's perspective, the services require additional hardware to be embedded into the vehicle, resulting in extra costs on the order of $250 to $350 or more per vehicle which cannot be recouped. Thus, manufacturers have been slow to fully commit to or invest in the provision of vehicle telematics equipment in all vehicles.

There have been rudimentary attempts in the past to determine when a smartphone is in a moving vehicle. Wireless service provider AT&T, Sprint and Verizon, for example, offer a smartphone application that reacts in a specific manner to incoming text messages and voice calls when a phone is in what AT&T calls DriveMode™. With the AT&T DriveMode application, a wireless telephone is considered to be in "drive mode" when one of two conditions are met. First, the smartphone operator can manually turn on the application, i.e., she "tells" the application to enter drive mode. Alternatively, when the DriveMode application is in automatic on/off mode and the smartphone GPS sensor senses that the smartphone is travelling at greater than 25 miles per hour, the GPS sensor so informs the DriveMode application, the DriveMode application concludes that the smartphone is in a moving vehicle, and drive mode is entered.

Both of these paths to engaging the AT&T DriveMode application - the "manual" approach to entering drive mode and the "automatic" approach to entering drive mode -- are problematic. First, if the smartphone operator forgets or simply chooses not to launch the DriveMode application prior to driving the vehicle when the application is in manual mode then the application will not launch. Second, in automatic on/off mode AT&T's use of only the GPS sensor to determine when a smartphone is in a moving vehicle is problematic for a number of reasons. First, the speed threshold of the application is arbitrary, meaning that drive mode will not be detected/engaged at less than 25 mph. If the vehicle is stopped in traffic or at a traffic signal, for example, then the DriveMode application may inadvertently terminate. Second, and perhaps more importantly, AT&T's DriveMode application requires that the smartphone's GPS functionality be turned on at all times. Because the use of a smartphone's GPS sensor is extremely demanding to the battery resources of a smartphone, this requirement severely undermines the usefulness of AT&T's application. Thirdly this method does not differentiate between the type of vehicle that the phone is in, e.g. a bus, a taxi or a train and therefore allows no correlation between the owner of the phone and her driving situation. For the classic embedded telematics devices to be replaces by smartphones it is important to correlate the driver and smartphone owner with her personal vehicle. Only then the smartphone can truly take the functional role of an embedded telematics device in a vehicle.

The main justification premise for a connected embedded device is the ability to not only detect an accident, but to autonomously call for help to either a privately operated emergency response center or 911. In fact, this safety function has been the main driver behind the last fifteen years of installing embedded communication devices in vehicles through major vehicle manufacturers. What is needed is a delivery of such a safety functionality without the need for any embedded device, thus allowing millions of drivers the safety benefit of automatic crash notification without the need for an expensive embedded device and a costly subscription. What is needed is an improved method and apparatus of determining, via a communication device, whether a vehicle has crashed.

### SUMMARY

The present invention provides an improved method and apparatus of determining, via a communication device, whether a vehicle has crashed.

Various embodiments described herein are drawn to a device for use within a vehicle. The device includes: a mode-determining component operable to generate an in-vehicle signal when the device is within the vehicle; a triggering parameter detecting component operable to detect a triggering parameter associated with a vehicle crash at a first time to and to generate a triggering detector signal based on the triggering detected parameter; and a position detecting component operable to detect a first position of the device at a second time *t₁,* to generate a first position signal based on the first detected position, to detect a second position of the device at a third time *t₂* and to generate a second position signal based on the second detected position when the mode-determining component generates the in-vehicle signal and when the triggering parameter detecting component generates a triggering detector signal. The mode-determining component is further operable to generate a crash mode signal when the first position signal corresponds to the second position signal.

### BRIEF SUMMARY OF THE DRAWINGS

The accompanying drawings, which are incorporated in and form a part of the specification, illustrate an exemplary embodiment of the present invention and, together with the description, serve to explain the principles of the invention. In the drawings:
**FIGs. 1A-B** are planar views of an interior of a vehicle at a times *t₀* and *t₁,* respectively;
**FIG. 2** illustrates an example device for detecting a crash in accordance with aspects of the present invention;
**FIG. 3** illustrates an example method of detecting a vehicle crash in accordance with aspects of the present invention;
**FIG. 4** illustrates an example parameter-detecting component in accordance with aspects of the present invention;
**FIG. 5** illustrates a plurality of example functions corresponding to parameters detected by an example device in accordance with aspects of the present invention;
**FIG. 6** illustrates an example method of automatically detecting a vehicle crash in accordance with aspects of the present invention;
**FIG. 7** illustrates a first graph of acceleration as a function of time of a communication device within a vehicle and a second graph of position as a function of time of the communication device within a vehicle during an example situation; and
**FIG. 8** illustrates a first graph of acceleration as a function of time of a communication device within a vehicle and a second graph of position as a function of time of the communication device within a vehicle during another example situation.

### DETAILED DESCRIPTION

Aspects of the present invention are drawn to a system and method for detecting a vehicle crash.

As used herein, the term "smartphone" includes cellular and/or satellite radiotelephone(s) with or without a display (text/graphical); Personal Communications System (PCS) terminal(s) that may combine a radiotelephone with data processing, facsimile and/or data communications capabilities; Personal Digital Assistant(s) (PDA) or other devices that can include a radio frequency transceiver and a pager, Intemet/Intranet access, Web browser, organizer, calendar and/or a global positioning system (GPS) receiver; and/or conventional laptop (notebook) and/or palmtop (netbook) computer(s), tablet(s), or other appliance(s), which include a radio frequency transceiver. As used herein, the term "smartphone " also includes any other radiating user device that may have time-varying or fixed geographic coordinates and/or may be portable, transportable, installed in or on a vehicle (aeronautical, maritime, or land-based) and/or situated and/or configured to operate locally and/or in a distributed fashion over one or more location(s).

Some conventional communication devices may detect a vehicle crash, and then switch to operate in a "crash mode." While in a crash mode, some functionalities of the communication device may be activated whereas other functionalities may be deactivated. For example, in a crash mode, a communication device may automatically contact emergency services and provide geodetic location information such that the emergency services can respond to the vehicle crash.

Conventional communication devices may detect a vehicle crash by way of monitoring a single parameter. In one example of a conventional communication device, a vehicle crash may be detected by monitoring deceleration. If a rapid deceleration is detected, and which corresponds to a previously known deceleration or family of decelerations associated with a vehicle crashing, the communication device may determine that a vehicle has been in a crash. However, such a conventional system may detect a vehicle crash when there in fact has not been a vehicle crash, i.e., results in a false - positive. This situation may occur for example if the communication device itself is dropped by the user, and the rapid deceleration of the communication device hitting the ground emulates a rapid deceleration associated with a vehicle crash.

In another example of a conventional communication device, a vehicle crash may be detected by monitoring vibrations of the chassis of the vehicle associated with deployment of an airbag. If a vibration is detected, and which corresponds to a previously known vibration or family of vibrations associated with the deployment of an airbag in a vehicle, the communication device may determine that a vehicle has been in a crash. However, such a conventional system may detect a vehicle crash when there in fact is not been vehicle crash, i.e., results in a false-positive. This situation may occur for example if the communication device is near some other event, that is not a vehicle crash, but that emulates the vibrations associated with the deployment of an airbag.

In another example of a conventional communication device, a vehicle crash may be detected by monitoring an on-board diagnostic (OBD) system. For example, the OBD may monitor whether the airbag has been deployed, or whether there has been a rapid deceleration followed by a total stoppage (zero measured velocity). However, if the OBD is not connected directly connected to a communication device when the vehicle crashes, then information relating to the vehicle crash as detected by the OBD cannot be easily and quickly relayed outside of the vehicle, e.g. to emergency services.

Aspects of the present invention reduce the likelihood of obtaining a false - positive determination of a vehicle crash without connecting to an OBD. In accordance with aspects of the present invention a vehicle crash may be identified by a communication device, e.g., a smartphone, within the vehicle at the time of the vehicle crash. First, the communication device determines whether it is located in a vehicle. This first determination will greatly decrease the number of false-positive vehicle crash detections. Then the communication device will detect at least two parameters associated with a vehicle crash. If, once in the vehicle, the communication device detects values of at least two parameters that correspond to known values of known parameters associated with a vehicle crash, it may determine that the vehicle has been in a crash. The detection of at least two parameters further decreases the number of false-positive vehicle crash detections.

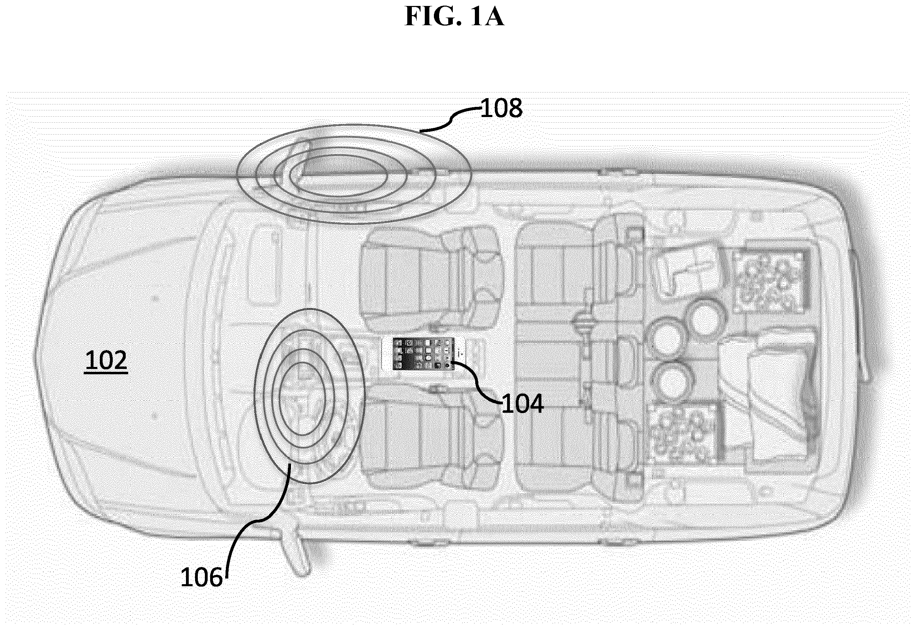

These aspects will now be described in more detail with reference to **FIGs. 1A-4****.**

**FIG. 1A** is a planar view of an interior of a vehicle **102** at a time to. For ease of explanation, the term "vehicle" as used herein is represented by a car. As stated above, however, a vehicle can be any form of aeronautical, maritime, or land-based vehicle. A position **104** represents the location of a smartphone within vehicle **102.** As used herein, the phrases "within vehicle", "within a vehicle", "in a vehicle", "in vehicle", or the like mean that the smartphone (or other device) is associated with a vehicle, including inside a vehicle, on a vehicle, contacting a vehicle, or the like, non-limiting examples of which include in a car, on a boat, in a boat, on a motorcycle, etc. A superposition of magnetic fields at position **104** is represented by field lines **106.** A superposition of sound at position **104** is represented by lines **108.** Again, in accordance with aspects of the present invention, parameters such as magnetic fields at position **104** and sound at position **104** may be detected by a communication device of person in vehicle **102** in order to detect a crash of vehicle **102.** The mode of operation of the communication device may be set to vehicle mode, by any known method.

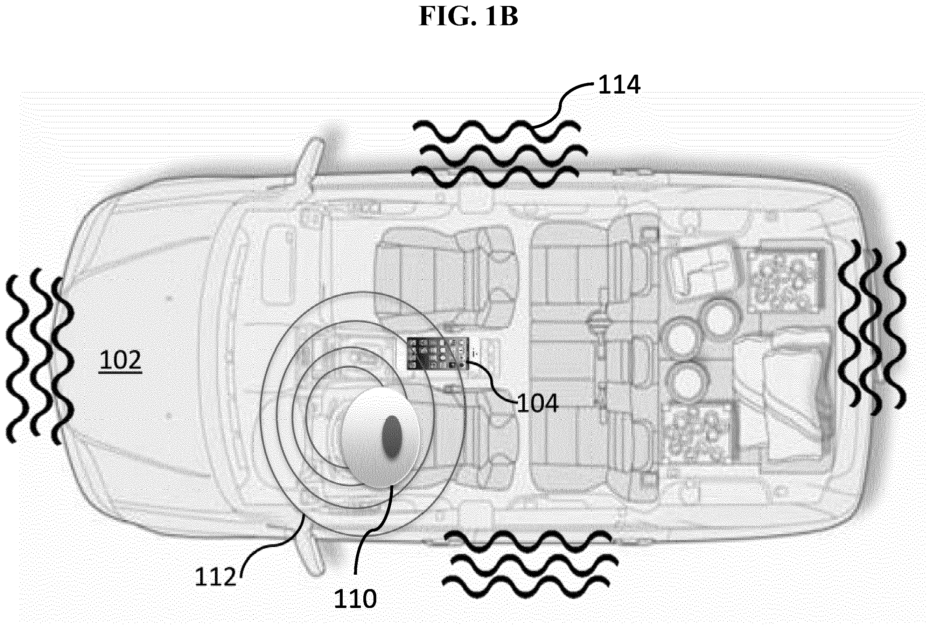

For purposes of discussion, consider the situation at some point in time *t₁* after time *to,* wherein vehicle **102** crashes. This will now be described with further reference to **FIG. 1B****.**

**FIG. 1B** is a planar view of an interior of a vehicle **102** at a time *ti.* A position **104** represents the location of a smartphone within vehicle **102.** In this figure, an airbag **110** has deployed as a result of vehicle **102** crashing. Deployment of airbag **110** generates a specific magnetic field as represented by field lines **112.** Further, deployment of airbag **110** generates a shockwave (specific vibrations) that travels throughout the chassis of vehicle **102** as represented by the wavy lines, a sample of which is indicated as wavy lines **114.** In accordance with aspects of the present invention, a communication device may be able to detect the crash of vehicle **102** based on being in the vehicle mode and based on detecting two parameters, in this example vibrations and a magnetic field associated with deployment of airbag **110.**

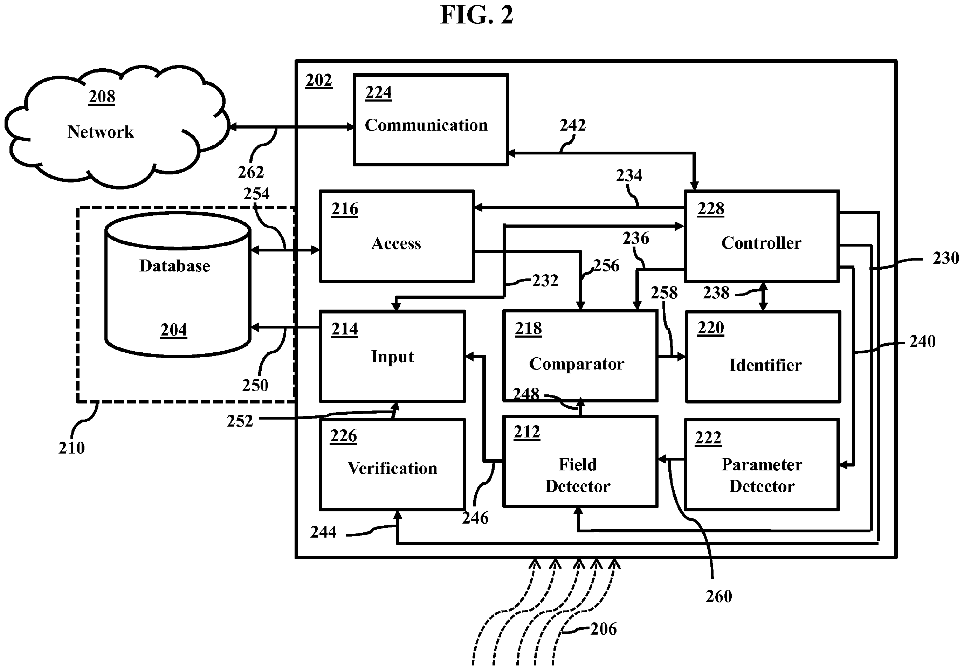

An example system and method for detecting a vehicle crash in accordance with aspects of the present invention will now be described with additional reference to **FIGs. 2-4****.**

**FIG. 2** illustrates an example device **202** in accordance with aspects of the present invention.

**FIG. 2** includes a device **202,** a database **204,** a field **206** and a network **208.** In this example embodiment, device **202** and database **204** are distinct elements. However, in some embodiments, device **202** and database **204** may be a unitary device as indicated by dotted line **210.**

Device **202** includes a field-detecting component **212,** an input component **214,** an accessing component **216,** a comparing component **218,** an identifying component **220,** a parameter-detecting component **222,** a communication component **224,** a verification component **226** and a controlling component **228.**

In this example, field-detecting component **212,** input component **214,** accessing component **216,** comparing component **218,** identifying component **220,** parameter-detecting component **222,** communication component **224,** verification component **226** and controlling component **228** are illustrated as individual devices. However, in some embodiments, at least two of field-detecting component **212,** input component **214,** accessing component **216,** comparing component **218,** identifying component **220,** parameter-detecting component **222,** communication component **224,** verification component **226** and controlling component **228** may be combined as a unitary device. Further, in some embodiments, at least one of field-detecting component **212,** input component **214,** accessing component **216,** comparing component **218,** identifying component **220,** parameter-detecting component **222,** communication component **224,** verification component **226** and controlling component **228** may be implemented as a computer having tangible computer-readable media for carrying or having computer-executable instructions or data structures stored thereon. Such tangible computer-readable media can be any available media that can be accessed by a general purpose or special purpose computer. Non-limiting examples of tangible computer-readable media include physical storage and/or memory media such as RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. For information transferred or provided over a network or another communications connection (either hardwired, wireless, or a combination of hardwired or wireless) to a computer, the computer may properly view the connection as a computer-readable medium. Thus, any such connection may be properly termed a computer-readable medium. Combinations of the above should also be included within the scope of computer-readable media.

Controlling component **228** is configured to communicate with: field-detecting component **212** via a communication line **230;** input component **214** via a communication line **232;** accessing component **216** via a communication line **234;** comparing component **218** via a communication line **236;** identifying component **220** via a communication line **238;** parameter-detecting component **222** via a communication line **240;** communication component **224** via a communication line **242;** and verification component **226** via a communication line **244.** Controlling component **228** is operable to control each of field-detecting component **212,** input component **214,** accessing component **216,** comparing component **218,** identifying component **220,** parameter-detecting component **222,** communication component **224** and verification component **226.**

Field-detecting component **212** is additionally configured to detect field **206,** to communicate with input component **214** via a communication line **246** and to communicate with comparing component **218** via a communication line **248.** Field-detecting component **212** may be any known device or system that is operable to detect a field, non-limiting examples of which include an electric field, a magnetic field, and electro-magnetic field and combinations thereof. In some non-limiting example embodiments, field-detecting component **212** may detect an amplitude of a field at an instant of time. In some non-limiting example embodiments, field-detecting component **212** may detect a field vector at an instant of time. In some non-limiting example embodiments, field-detecting component **212** may detect an amplitude of a field as a function over a period of time. In some non-limiting example embodiments, field-detecting component **212** may detect a field vector as a function over a period of time. In some non-limiting example embodiments, field-detecting component **212** may detect a change in the amplitude of a field as a function over a period of time. In some non-limiting example embodiments, field-detecting component **212** may detect a change in a field vector as a function over a period of time. Field-detecting component **212** is additionally able to generate a field signal based on the detected field.

Input component **214** is additionally configured to communicate with database **204** via a communication line **250** and to communicate with verification component **226** via a communication line **252.** Input component **214** may be any known device or system that is operable to input data into database **204.** Non-limiting examples of input component **214** include a graphic user interface having a user interactive touch screen or keypad.

Accessing component **216** is additionally configured to communicate with database **204** via a communication line **254** and to communicate with comparing component **218** via a communication line **256.** Accessing component **216** may be any known device or system that access data from database **204.**

Comparing component **218** is additionally configured to communicate with identifying component **220** via a communication line **258.** Comparing component **218** may be any known device or system that is operable to compare two inputs.

Parameter-detecting component **222** is additionally configured to communicate with field-detecting component **212** via a communication line **260.** Parameter-detecting component **222** may be any known device or system that is operable to detect a parameter, non-limiting examples of which include velocity, acceleration, geodetic position, sound, temperature, vibrations, pressure, contents of surrounding atmosphere and combinations thereof. In some non-limiting example embodiments, parameter-detecting component **222** may detect an amplitude of a parameter at an instant of time. In some non-limiting example embodiments, parameter-detecting component **222** may detect a parameter vector at an instant of time. In some non-limiting example embodiments, parameter-detecting component **222** may detect an amplitude of a parameter as a function over a period of time. In some non-limiting example embodiments, parameter-detecting component **222** may detect a parameter vector as a function over a period of time. In some non-limiting example embodiments, parameter-detecting component **222** may detect a change in the amplitude of a parameter as a function over a period of time. In some non-limiting example embodiments, parameter-detecting component **222** may detect a change in a parameter vector as a function over a period of time.

Communication component **224** is additionally configured to communicate with network **208** via a communication line **262.** Communication component **224** may be any known device or system that is operable to communicate with network **208.** Non-limiting examples of communication component include a wired and a wireless transmitter/receiver.

Verification component **226** may be any known device or system that is operable to provide a request for verification. Non-limiting examples of verification component **226** include a graphic user interface having a user interactive touch screen or keypad.

Communication lines **230, 232, 234, 236, 238, 240, 242, 244, 244, 246, 248, 250, 252, 254, 256, 258, 260** and **262** may be any known wired or wireless communication path or media by which one component may communicate with another component.

Database **204** may be any known device or system that is operable to receive, store, organize and provide (upon a request) data, wherein the "database" refers to the data itself and supporting data structures. Non-limiting examples of database **204** include a memory hard-drive and a semiconductor memory.

Network **208** may be any known linkage of two or more communication devices. Non-limiting examples of database **208** include a wide-area network, a local-area network and the Internet.

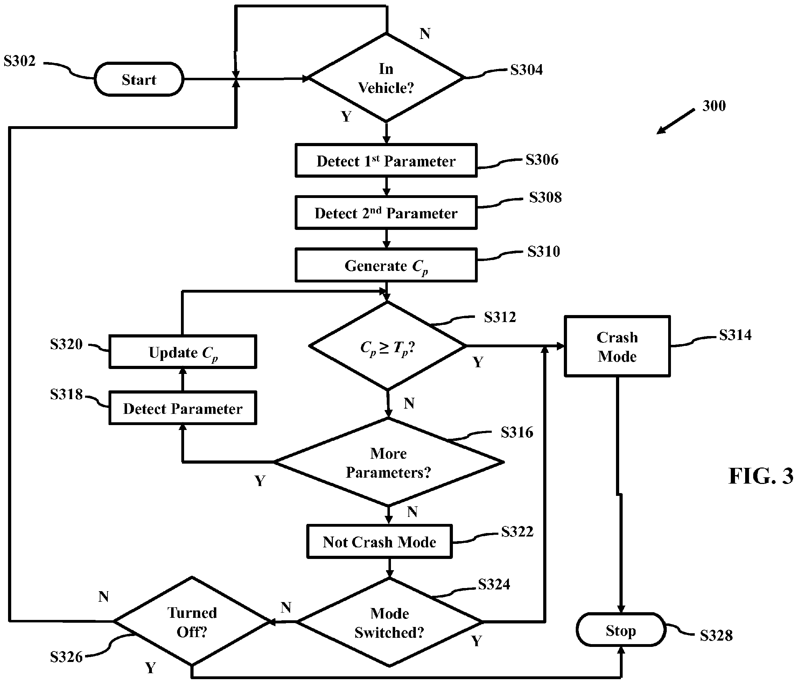

**FIG. 3** illustrates an example method **300** of detecting a vehicle crash in accordance with aspects of the present invention.

Method **300** starts **(S302)** and it is determined whether the device is in a vehicle **(S304).** For example, returning to **FIGs. 1A-2****,** device **202** may determine that it is in vehicle **102** by any known method, non-limiting examples of which include detecting parameters and comparing the detected parameters with those associated with vehicle **102.** Non-limiting examples of known parameters include magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof.

In an example embodiment, device **202** determines whether it is in a vehicle and as described in copending U.S. Application No. 14/095,156 filed December 3, 2013. For example, device **202** may detect at least one of many parameters. Database **204** may have stored therein known parameters values that are indicative of being in a vehicle. As stated above, the phrase "within vehicle" or "within a vehicle" means that the smartphone (or other device) is associated with a vehicle, including inside a vehicle, on a vehicle, contacting a vehicle, or the like, non-limiting examples of which include in a car, on a boat, in a boat, on a motorcycle, etc. Comparing component may compare signals based on the detected parameters with a previously stored signature corresponding to a vehicle in database **204.** Identifying component **220** may generate an in-vehicle signal indicating that device is in a vehicle based on the comparison by comparing component **218.** For the avoidance of doubt, the phrase "in-vehicle signal" is a general term to include a signal indicating that the device is in, or, in contact with, or otherwise associated with a vehicle.

If it is determined that device **202** is not in a vehicle (N at **S304),** then method **300** may continue waiting for such a state (return to **S304).**

On the other hand, if it is determined that device **202** is in a vehicle (Y at **S304),** then a first parameter is detected **(S306).** For example, returning to **FIG. 2****,** let the parameter be a field, wherein field-detecting component **212** detects field **206.** For purposes of discussion, let field **206** include a magnetic field generated by the deployment of an airbag in response to the vehicle being involved with a crash, as discussed above with reference to **FIG. 1B****.** This is a non-limiting example, wherein the detected parameter may be any known detectable parameter, of which other non-limiting examples include magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof.

Returning to **FIG. 3****,** after the first parameter is detected **(S306),** a second parameter is detected **(S308).** For example, returning to **FIG. 2****,** controlling component **228** may instruct at least one of field-detecting component **212** and parameter-detecting component **222** to detect another parameter. This is similar to method **300 (S308)** discussed above with reference to **FIG. 3****.**

For example, returning to **FIG. 2****,** controlling component **228** may instruct at least one of field-detecting component **212** and parameter-detecting component **222** to detect another parameter.

A magnetic field associated with the deployment of an airbag may be a relatively distinct parameter that may be used to determine whether a vehicle, of which the communication device is located, has been in a crash. However, there may be situations that elicit a false positive - e.g., a magnetic field that erroneously indicates that an airbag has been deployed and indicating a vehicle crash is actually a magnetic field associated with the operation of an automatic seat positioner within the vehicle, which has not been in a crash. As such, in order to reduce the probability of a false-positive indication that the vehicle has been in a crash, a second parameter associated with a vehicle crash may be used. Along this notion, it is an example aspect of the invention to detect a plurality of parameters associated with a vehicle crash to increase the probability of a correct identification of a vehicle crash.

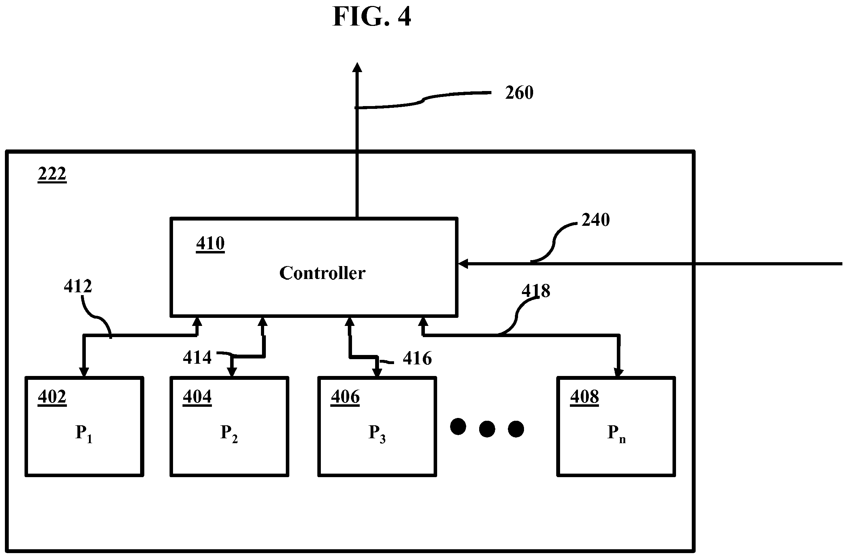

In some embodiments, device **202** has a predetermined number of parameters to detect, wherein controlling component **228** may control such detections. For example, the first parameter to be detected (in **S306**) may be a magnetic field associated with the deployment of an airbag, wherein controlling component **228** may instruct field-detecting component **212** to detect a magnetic field. Further, a second parameter to be detected may be another known detected parameter additionally associated with a vehicle crash, e.g., deceleration in three dimensions, wherein controlling component **228** may instruct parameter-detecting component **222** to detect the second parameter. Further parameter-detecting component **222** may be able to detect many parameters. This will be described with greater detail with reference to **FIG. 4****.**

**FIG. 4** illustrates an example parameter-detecting component **222.**

As shown in the figure, parameter-detecting component **222** includes a plurality of detecting components, a sample of which are indicated as a first detecting component **402,** a second detecting component **404,** a third detecting component **406** and an *n*-th detecting component **408.** Parameter-detecting component **222** additionally includes a controlling component **410.**

In this example, detecting component **402,** detecting component **404,** detecting component **406,** detecting component **408** and controlling component **410** are illustrated as individual devices. However, in some embodiments, at least two of detecting component **402,** detecting component **404,** detecting component **406,** detecting component **408** and controlling component **410** may be combined as a unitary device. Further, in some embodiments, at least one of detecting component **402,** detecting component **404,** detecting component **406,** detecting component **408** and controlling component **410** may be implemented as a computer having tangible computer-readable media for carrying or having computer-executable instructions or data structures stored thereon.

Controlling component **410** is configured to communicate with: detecting component **402** via a communication line **412;** detecting component **404** via a communication line **414;** detecting component **406** via a communication line **416;** and detecting component **408** via a communication line **418.** Controlling component **410** is operable to control each of detecting component **402,** detecting component **404,** detecting component **406** and detecting component **408.** Controlling component **410** is additionally configured to communicate with controlling component **228** of **FIG. 2** via communication line **240** and to communicate with field-detecting component **212** of **FIG. 2** via communication line **260.**

The detecting components may each be a known detecting component that is able to detect a known parameter. For example each detecting component may be a known type of detector that is able to detect at least one of magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof. For purposes of discussion, let: detecting component **402** be able to detect deceleration in three dimensions; detecting component **404** be able to detect sound; detecting component **406** be able to detect vibrations; and detecting component **408** be able to detect geodetic position.

In some non-limiting example embodiments, at least one of the detecting components of parameter-detecting component **222** may detect a respective parameter as an amplitude at an instant of time. In some non-limiting example embodiments, at least one of the detecting components of parameter-detecting component **222** may detect a respective parameter as a function over a period of time.

Each of the detecting components of parameter-detecting component **222** is able to generate a respective detected signal based on the detected parameter. Each of these detected signals may be provided to controlling component **410** via a respective communication line.

Controlling component **410** is able to be controlled by controlling component **228** via communication line **240.**

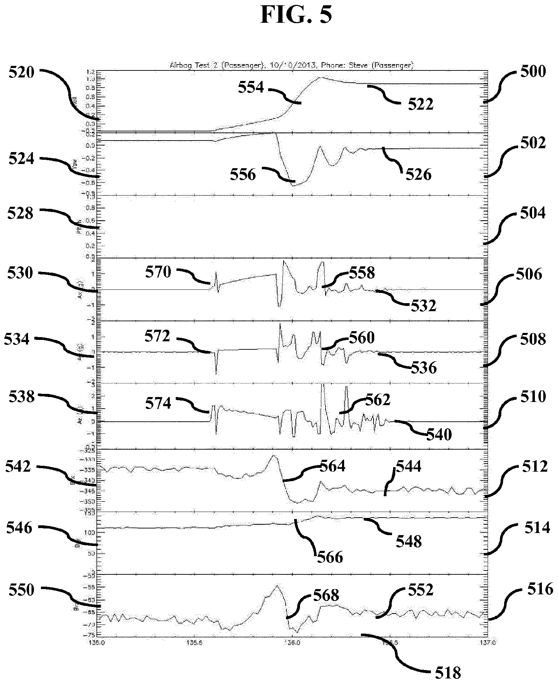

Consider the example situation where communication device **202** generates a signature of a vehicle crash, wherein field detecting component **212** detects a magnetic field associated with deployment of an airbag as discussed above with reference to **FIG. 1B****,** wherein detecting component **402** detects roll, pitch and yaw associated with movement of the communication device **202** during the vehicle crash and wherein detecting component **406** detects vibrations associated with a shockwave traveling through the chassis of the vehicle as a result of the deployment of the airbag as discussed above with reference to **FIG. 1B****.** This will be further described with reference to **FIG. 5****.**

**FIG. 5** includes a graph **500,** a graph **502,** a graph **504,** a graph **506,** a graph **508,** a graph **510,** a graph **512,** a graph **514,** and a graph **516,** each of which share a common x-axis **518** in units of seconds. Graph **500** has a y-axis **520** in units of degrees and includes a function **522.** Graph **502** has a y-axis **524** in units of degrees and includes a function **526.** Graph **504** has a y-axis **528** in units of degrees and has no function therein. Graph **506** has a y-axis **530** in units of m/s² and includes a function **532.** Graph **508** has a y-axis **534** in units of m/s² and includes a function **536.** Graph **510** has a y-axis **538** in units of m/s² and includes a function **540.** Graph **512** has a y-axis **542** in units of µT and includes a function **544.** Graph **514** has a y-axis **546** in units of µT and includes a function **548.** Graph **516** has a y-axis **550** in units of µT and includes a function **552.**

Function **522** corresponds to the angular acceleration in a roll direction relative to parameter-detecting component **222.** Function **526** corresponds to the angular acceleration in a yaw direction relative to parameter-detecting component **222.** As there is no recorded function that corresponds to the angular acceleration in a pitch direction relative to parameter-detecting component **222,** in this example, no angular acceleration in a pitch direction relative to parameter-detecting component **222** was detected. Function **532** corresponds to the acceleration in an x-direction relative to parameter-detecting component **222.** Function **536** corresponds to the acceleration in a y-direction relative to parameter-detecting component **222.** Function **540** corresponds to the acceleration in a z-direction relative to parameter-detecting component **222.** Function **544** corresponds to the magnitude of B in an x-direction relative to field-detecting component **212.** Function **548** corresponds to the magnitude of B in a y-direction relative to field-detecting component **212.** Function **552** corresponds to the magnitude of B in a z-direction relative to field-detecting component **212.**

A sudden change in the roll manifests as curve **554** in function **522.** A sudden change in the yaw manifests as transient **556** in function **526.** A sudden change in acceleration manifests as transient **558** in function **532,** as transient **560** in function **536** and as transient **562** in function **540.** A sudden change in the magnetic field manifests as transient **564** in function **544,** as small change **566** in function **548** and as transient **568** in function **552.** These changes and transients in functions **522, 526, 532, 536, 540, 544, 548** and **552** may be indicative of an event.

For purposes of discussion, let these changes and transients in functions **522, 526, 532, 536, 540, 544, 548 and 552** correspond to communication device **202** changing position as a result of a vehicle crash. Specifically, let curve **554** in function **522** transient **556** in function **526** correspond to a sudden change in position of communication device 202 when the vehicle crashes. Further, let transient **558** in function **532,** transient **560** in function **536** and transient **562** in function **540** correspond to a shockwave within the chassis associated with deployment of the airbag when the vehicle crashes. Finally, let transient **564** in function **544,** change **566** in function **548** and transient **568** in function **552** correspond to a magnetic field associated with deployment of the airbag when the vehicle crashes.

In this example, spike **570** in function **532,** spike **572** in function **536** and spike **574** in function **540** correspond to the dropping of communication device into position to start the crash test of the vehicle.

In this example therefore, the vehicle crash may have a signature based on functions **522, 526, 532, 536, 540, 544, 548 and 552,** having tell-tail changes and transients **554, 556, 558, 560, 562, 564, 566 and 568,** respectively. In some embodiments, field-detecting component **212** may additionally process any of functions **522, 526, 532, 536, 540, 544, 548 and 552** and combinations thereof to generate such a signature. Non-limiting examples of further processes include averaging, adding, subtracting, and transforming any of functions **612, 614, 616, 618** and combinations thereof.

Returning to **FIG. 3****,** after the first two parameters are detected **(S306** and **S308),** a crash probability, *Cₚ,* is generated **(S310).** For example, first a previously-stored signature (or signatures) may be retrieved, which is based on parameters associated with a vehicle crash. Then a crash signature is generated based on the detected parameters. Then the crash signature is compared with the previously-stored signature (or signatures), wherein the comparison is used to generate the crash probability *Cₚ.* The crash probability *Cₚ* is a value that indicates the likelihood that the vehicle has crashed based on the similarity of the previously-stored signature and the newly-generated signature. In essence, it is determined whether the previously detected parameters associated with a previous vehicle crash (or previous vehicle crashes) are similar to the newly detected parameters.

In an example embodiment, the previously-stored signature may be stored in database **204.** A crash signature may be created by any known system or method and may be based detected parameters associated with previously recorded crashes. For example, crash signatures may be created based on previously recorded crashes from controlled crashes in a testing environment, i.e., test-crashes, and uncontrolled crashes, e.g., automobile accidents.

In some example embodiments, a plurality of crash signatures are stored in database **204,** wherein each crash signature is associated with a particular make, model and year vehicle. These crash signatures may be generated from previously recorded crashes from controlled crashes and uncontrolled crashes.

In some example embodiments, a plurality of crash signatures are stored in database **204,** wherein each crash signature is associated with many different makes, models and years of vehicles. These crash signatures may be generated from previously recorded crashes from controlled crashes and uncontrolled crashes.

In some example embodiments, a plurality of crash signatures are stored in database **204,** wherein each crash signature is associated with a particular type of vehicle crash, e.g., front, rear or side. These crash signatures may be generated from previously recorded crashes from controlled crashes and uncontrolled crashes.

In some example embodiments, a plurality of crash signatures are stored in database **204,** wherein each crash signature is associated with a combination of: many different makes, models and years of vehicle and with a particular type of vehicle crash, e.g., front, rear or side. These crash signatures may be generated from previously recorded crashes from controlled crashes and uncontrolled crashes.

Non-limiting examples of detected parameters for which each crash signature is based include at least one of magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof.

As for how a crash signature is generated, in some embodiments it is a signal output from a detecting component that is capable of detecting a parameter. A crash signature may be a composite detected signal that is based on any of an individual detected signal, and combination of a plurality of detected signals. In some embodiments, any of the individual detected signals and combinations thereof may be additionally processed to generate a crash. Non-limiting examples of further processes include averaging, adding, subtracting, and transforming any of the individual detected signals and combinations thereof. For purposes of discussion, consider the situation where a vehicle is crash-tested and parameters are detected to generate a crash signature. In this example, let the crash signature be based on: a detected magnetic field associated with deployment of the airbag during the crash; a detected deceleration in three dimensions during the crash; a detected sound during the crash; and detected vibrations during the crash. Further, in this example, let the crash signature be the five separate signals, such that future comparisons with other crash signatures will compare signals of similar parameters.

Returning to **FIG. 2****,** previously stored crash signatures are stored in database **204** as *a priori* information.

Controlling component **228** may then instruct access component **216** to retrieve a previously-stored signature, from database **204** and to provide the previously-stored signature to comparing component **218.** In some embodiments, a single previously-stored signature is retrieved, wherein in other embodiments, more than one previously-stored signature may be received.

Controlling component **228** may then instruct comparing component **218** to generate a crash probability, *Cₚ,* indicating a probability that the vehicle crashed.

In embodiments where a single previously-stored signature is retrieved, the newly generated signature may be compared with the single previously-stored signature. The crash probability *Cₚ* may then be generated based on the similarity between the newly generated signature and the single previously-stored signature.

In some embodiments where plural previously-stored signatures are retrieved, the newly generated signature may be compared each previously-stored signature in a serial manner. The crash probability *Cₚ* may then be generated based on the similarity between the newly generated signature and the single previously-stored signature of which is most similar to the newly generated signature.

In some embodiments where plural previously-stored signatures are retrieved, the newly generated signature may be compared each previously-stored signature in a parallel manner. The crash probability *Cₚ* may then be generated based on the similarity between the newly generated signature and the single previously-stored signature of which is most similar to the newly generated signature.

In an example embodiment, the newly generated signature is compared with a single previously-stored signature. If the newly generated signature is exactly the same as the previously-stored signature, then the generated crash probability will be 1, thus indicating that the vehicle has crashed. Variations between the newly generated signature and the previously-stored signature will decrease the generated crash probability, thus decreasing the likelihood that the vehicle has crashed. Any known method of comparing two signatures to generate such a probability may be used.

In an example embodiment, a comparison is made between similar parameter signals. For example, let a previously-stored signature be a function corresponding to a previously-detected magnetic field and a second function corresponding to a previously-detected deceleration in three dimensions, and let a newly-detected signature be a function corresponding to a newly-detected magnetic field and a second function corresponding to a newly-detected deceleration in three dimensions. The comparison would include a comparison of the function corresponding to the previously-detected magnetic field and the function corresponding to the newly-detected magnetic field and a comparison of the second function corresponding to a previously-detected deceleration in three dimensions and the second function corresponding to a newly-detected deceleration in three dimensions.

Controlling component **228** may then provide the crash probability *Cₚ* to identifying component **220** via communication line **258.**

Returning to **FIG. 3****,** it is then determined whether the generated crash probability *Cₚ* is greater than or equal to a predetermined probability threshold, *Tₚ* **(S312).** For example, identifying component **220** may have a predetermined probability threshold *Tₚ* stored therein. The probability threshold *Tₚ* may be established to take into account acceptable variations in detected parameters. For example, all vehicles may have varying unique parameter signatures, e.g., magnetic signatures, thermal signatures, acoustic signatures, etc. However, the corresponding parameter signatures of all vehicles in a crash may be considered somewhat similar. These similarities may be taken into account when setting the probability threshold *Tₚ.*

Clearly, if the probability threshold *Tₚ* is set to 1, this would only be met if newly generated signature is exactly the same as the previously-stored signature (or one of the previously stored signatures), thus indicating that the vehicle has crashed. Further, this threshold would not be met if the sensors did not detect the exact parameters, which does not generally represent a real world scenario. On the contrary, if the probability threshold *Tₚ* is decreased, it would take into account variations in the detected parameters. Further, if the probability threshold *Tₚ* is decreased further, it may take into account variations in a class of vehicle crashes, e.g., difference vehicles, or crashes from various angles.

In an example embodiment, identifying component **220** determines whether the crash probability *Cₚ* generated by comparing component **218** is greater than or equal to the predetermined probability threshold *Tₚ.* In this case, identifying component **220** is a probability-assessing component that generates a probability of a specific mode based on a comparison or comparison signal.

Returning to **FIG. 3****,** if it is determined that the generated crash probability is greater than or equal to the predetermined probability threshold **(Y** at **S312),** then the device is operated in a crash mode **(S314).** For example, consider the situation where a person carrying device **202** is driving in vehicle **102,** which crashes. Identifying component **220** has determined that the newly detected signature associated with the detected parameters from the crash matches a previously-stored signature for a vehicle crash. In such a case, identifying component **220** provides a crash mode signal to controlling component **228,** via communication line **238,** indicating device **202** should operate in a crash mode. Further, for purposes of discussion, let the crash mode be such a mode wherein predetermined functions of device **202** may be activated, such as automatically contacting emergency services.

In this situation, identifying component **220** acts as a mode-determining component and has generated an in-vehicle signal indicating that device **202** is in a vehicle. Further field-detecting component **212** has generated a detector signal based on a first detected parameter, in this example, a detected magnetic field associated with the deployment of an airbag. Additionally, parameter-detecting component **222** has generated a detector signal based on a second detected parameter, in this example, a detected deceleration. Finally, identifying component **220** generates the crash mode signal based on the in-vehicle signal, the signal based on the first parameter and the signal based on the second parameter. Having the crash mode signal being based on the in-vehicle signal, and both detector signals greatly decreases the chances of false-positive identifications of a vehicle crash. Further, this system is able to generate an accurate crash mode signal without accessing the OBD.

Returning to **FIG. 3****,** once the device is operated in the crash mode **(S314),** method **300** stops **(S328).**

If it is determined that the generated crash probability is less than the predetermined probability threshold (N at **S312),** it is determine whether an additional parameter is to be detected **(S316).** For example, returning to **FIG. 3****,** as discussed previously, parameter-detecting component **222** may be able to detect a plurality of parameters. In some embodiments, all parameters are detected at once, whereas in other embodiments some parameters are detected at different times.

Consider the situation where an initially generated crash probability is based only on a newly-detected magnetic field as detected by field-detecting component **212** and on a newly-detected deceleration in three dimensions as detected by detecting component **302.** Further, for purposes of discussion, let the generated crash probability be less than the predetermined probability threshold. In such a case, if more parameters had been detected, they may be used to further indicate that the vehicle has crashed.

Returning to **FIG. 3****, if** an additional parameter is to be detected (Y at **S316),** then an additional parameter is detected **(S318).** For example, controlling component **228** may instruct parameter-detecting component **222** to provide additional information based on additionally detected parameters to field-detecting component **212.**

Returning to **FIG. 3****,** after the additional parameter is detected **(S318),** the crash probability is updated **(S320).** For example, the new signature may be generated in a manner similar to the manner discussed above in method **300 (S310)** of **FIG. 3****.** Controlling component **228** may then instruct access component **216** to retrieve the previously-stored signature, e.g., from method **300** of **FIG. 3****,** from database **204** and to provide the previously-stored signature to comparing component **218.**

Controlling component **228** may then instruct comparing component **218** to generate an updated crash probability, *Cₚᵤ,* indicating a probability that the vehicle has crashed. In an example embodiment, the newly generated signature is compared with the previously-stored signature. Again, any known method of comparing two signatures to generate such a probability may be used.

In an example embodiment, a comparison is made between similar parameter signals. For purposes of discussion, let the previously generated crash probability *Cₚ* be based on the newly-detected magnetic field as detected by field-detecting component **212** and on a newly-detected deceleration in three dimensions as detected by detecting component **402.** Now, let the updated, generated crash probability *Cₚᵤ* be based on: 1) the newly-detected magnetic field as detected by field-detecting component **212;** 2) the newly-detected deceleration in three dimensions as detected by detecting component **402;** and 3) a newly-detected vibration as detected by detecting component **406.**

The new comparison may include: a comparison of the function corresponding to the previously-detected magnetic field and the function corresponding to the newly-detected magnetic field; a comparison of the second function corresponding to a previously-detected deceleration in three dimensions and the second function corresponding to the newly-detected deceleration in three dimensions; and a comparison of the second function corresponding to a previously-detected vibration and the second function corresponding to the newly-detected vibration.

Returning to **FIG. 3****,** after the crash probability is updated **(S320),** it is again determined whether the generated crash probability is greater than or equal to the predetermined probability threshold **(S312).** Continuing the example discussed above, now that many more parameters have been considered in the comparison, the updated crash probability *Cₚ,* which is now *Cₚᵤ,* is greater than or equal to the probability threshold *Tₚ.* For example, although the previous comparison between only two parameters provided a relatively low probability, the additional parameters greatly increased the probability. For example, consider the situation where the detected magnetic field and the detected deceleration in three dimensions are sufficiently dissimilar to the previously stored magnetic field and deceleration in three dimensions associated with a vehicle crash. However, now that more parameters are considered, e.g., sound, velocity, vibrations and change in geodetic position, it may be more likely that vehicle has, in fact, crashed.

Returning to **FIG. 3****,** if an additional parameter is not to be detected (N at **S316),** then the device is not operated in the crash mode **(S322).** If the crash probability *Cₚ* is ultimately lower than the predetermined probability threshold *Tₚ,* then it is determined that the vehicle has not crashed. As such, device **202** would not be operating in the crash mode.

Returning to **FIG. 3****,** it is then determined whether the current operating mode has been switched to the crash mode **(S324).** For example, returning to **FIG. 2****,** there may be situations where a user would like device **202** to operate in a crash mode, even though device **202** is not currently operating in such a mode. In those situations, user **202** may be able to manually change the operating mode of device **202.** For example, a GUI of input component **214** may enable the user to instruct controlling component **228,** via communication line **232,** to operate in a specific mode.

Returning to **FIG. 3****,** if it is determined that the current operating mode has been switched to the crash mode (Y at **S324),** then the device is operated in a crash mode **(S314).**

Alternatively, if it is determined that the mode has not been switched (N at **S324),** then it is determined whether the device has been turned off **(S326).** For example, returning to **FIG. 2****,** there may be situations where a user turns off device **202** or device **202** runs out of power. If it is determined that the device has not been turned off (N at **S326),** the process repeats and it is determined whether the device is in a vehicle **(S304).** Alternatively, if it is determined that the device has been turned off (Y at **S326),** the method **300** stops **(S328).**

In some embodiments, when it is determined that device **202** is in a vehicle (Y at **S304),** field-detecting component **212** and parameter-detecting component **222** may be operated to detect respective parameters at the fasted rate possible. In this manner, a crash may be accurately detected as soon as possible, but much power may be expended in device **202.**

In some embodiments, when it is determined that device **202** is in a vehicle (Y at **S304),** field-detecting component **212** and parameter-detecting component **222** may be adjusted to operate to detect respective parameters at the lower rate. In this manner, a crash may be accurately detected as with some delay, but power of device **202** may be saved. In an example embodiment, a user is able to adjust the detection rate of field-detecting component **212** and parameter-detecting component **222** by way of the GUI in input component **214.**

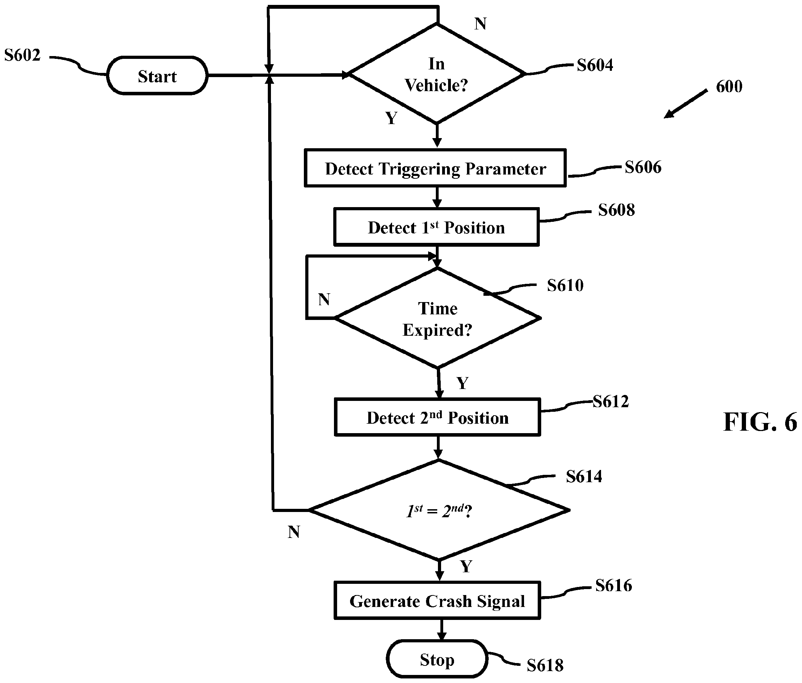

The above discussed example embodiments deal with automatically detecting a vehicle crash with a communication device, wherein a generated parameter signature is compared with *α priori* crash signatures. In other example embodiments, a vehicle crash is detected by: first determining whether the communication device is within the vehicle; then detecting a triggering crash-associated parameter; then determining whether the vehicle has stopped moving after a predetermined period of time. Examples of such embodiments will now be described in greater detail with reference to **FIGs. 6-9****.**

**FIG. 6** illustrates an example method **600** of automatically detecting a vehicle crash in accordance with aspects of the present invention.

As shown in the figure, method **600** starts **(S602)** and it is determined whether the communication device is operating in a vehicle mode **(S604).** Any known system or method of determining when the communication device is operating in a vehicle may be used. For example, please note method **300** discussed above with reference to **FIG. 3** **(S304).**

Returning to **FIG. 6****,** if it is determined that the communication device is not operating in a vehicle mode **(N** at **S604),** method **600** continues to determine whether the communication device is still in the vehicle (return to **S604).**

Alternatively, if it is determined that the communication device is operating in a vehicle mode **(Y** at **S604),** a triggering parameter is then detected (**S606**). A triggering parameter is a detectable parameter associated with a vehicle crash. Any known system or method for detecting a triggering parameter may be used. For example, as discussed above with reference to **FIG. 4****,** any of the parameters, or combinations thereof, detected by parameter-detecting component **222** may be a triggering parameter.

For purposes of discussion, consider communication device **202** of **FIG. 2** and let acceleration be a triggering parameter, such that when parameter-detecting component **222** detects a specific acceleration, it is indicative of a vehicle crash.

Unfortunately, there may be situations where such an indication of a vehicle crash is a false positive. For example, a person in the vehicle might drop communication device **202** in the cabin of the vehicle. The detected rapid deceleration of communication device **202,** when communication device **202** hits the floor of the cabin of the vehicle, might mimic a rapid deceleration associated with a vehicle crash. This aspect of the present invention avoids such false positives by providing additional parameter detections. As such, in this case, parameter-detecting component **222** is a triggering parameter detecting component that detects a triggering parameter associated with a vehicle crash and generates a triggering detector signal based on the detected triggering parameter.

Parameter-detecting component **222** provides the initiating detector signal to controlling component **228** via communication channel **240.** Controlling component **228** then initiates a more precise crash detection once initiated by the initiating detector signal.

Returning to **FIG. 6****,** after a triggering parameter is detected **(S606),** a first position of the communication device is determined **(S608).** For example, any known system or method for detecting the position of communication device may be used. For example, as discussed above with reference to **FIG. 4****,** detecting component **408** be able to detect geodetic position. In other embodiments, for example as shown in **FIG. 2****,** communication component **224** may receive GPS data associated with communication device **202** from network **208.** In either case, a position signal based on the detected position of communication device **202** is provided to controlling component **228.**

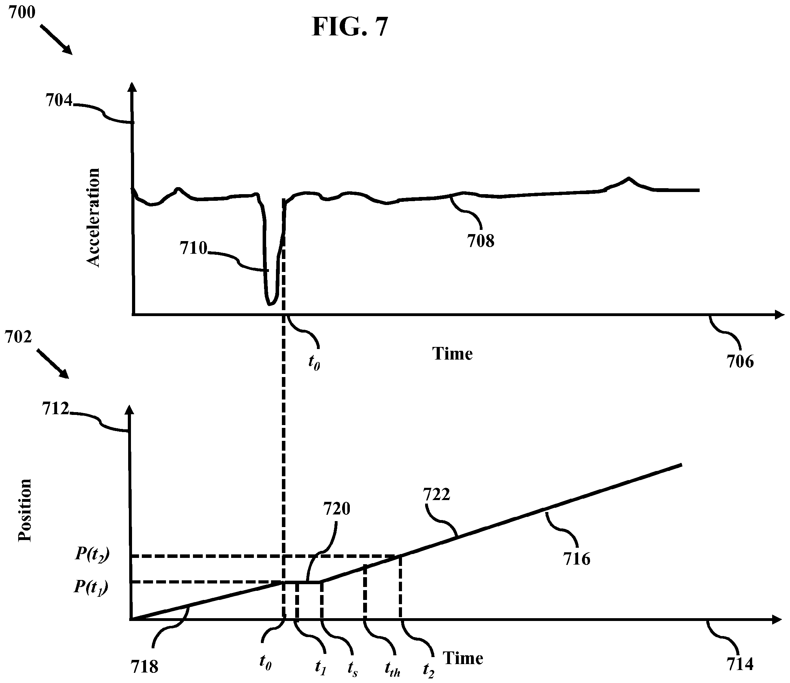

Further, controlling component **228** starts a timer, wherein a time *t₁* is the time the position of communication device **202** is first determined after controlling component receives the triggering detector signal. This will be further described with reference to **FIG. 7****.**

**FIG. 7** illustrates a graph **700** of acceleration as a function of time of a communication device within a vehicle and a graph **702** of position as a function of time of the communication device within a vehicle during an example situation.

As shown in the figure, graph **700** has a y-axis **704** of acceleration, an x-axis **706** of time and a function **708.** Function **708** includes a drastic notch **710** at time to.

Graph **702** has a y-axis **712** of position, an x-axis **714** of time and a function **716.** Function **716** includes a rising portion **718** until time *to,* a flat portion **720** from time *to* to time *tₛ* and a rising portion after time *tₛ.*

In this example, prior to the time of drastic notch **710** in graph **700,** as shown by rising portion **718** of function **716** of graph **702,** the position of communication device **202,** and hence the position of the vehicle (not shown) for which communication device **202** resides is increasing as a function of time. Therefore, communication device **202** is moving.

Let drastic notch **710** correspond to a recognized signature that is associated with a vehicle crash. Accordingly, further analysis of the situation should be performed. A triggering detector signal based on the based on drastic notch **710** at time *to* initiates further analysis. As shown in graph **702,** at time *t₁* a position of communication device **202** is detected.

Returning to **FIG. 6****,** after the first position of the communication device is determined **(S608),** it is determined whether a predetermined time has expired **(S610).** For example, returning to **FIG. 2****,** controller **228** may have a timing threshold, *tₜₕ,* stored therein. *tₜₕ* is a wait period after receipt of triggering detector signal and will decrease the likelihood of false positive identifications of vehicle crashes.

Consider, for example, the situation where a vehicle drastically brakes to avoid a collision - even coming to a complete stop. In such a situation, since the collision was avoided, the driver eventually starts moving again. This pause of time between the complete stop and the restart of motion is modeled with *tₜₕ.* In some embodiments *tₜₕ* is fixed, for example at 20 seconds. In other example embodiments, *tₜₕ* may be adjusted, for example via input component **214.** In this example situation, let *tₜₕ* be 20 seconds, which starts after *to.*

Returning to **FIG. 6****,** if it is determined that the predetermined time has not expired **(N** at **S610),** method **600** continues until the time expires (return to **S610**). If it is determined that the predetermined time has expired (**Y** at **S610**), a second position of the communication device is determined **(S612).** Again, any known system or method for detecting the position of communication device may be used. A new position signal based on the detected position of communication device **202** is provided to controlling component **228.**

Returning to **FIG. 6****,** after the second position of the communication device is determined **(S612),** it is determined whether the first position is substantially the same as the second position **(S614).**

If it is determined that the first position is not substantially the same as the second position **(N** at **S614),** method **600** continues to determine whether the communication device is still in the vehicle (return to **S604).** For example, returning to **FIG. 2****,** controlling component **228** provides the first position data and second position data of communication device **202** to comparing component **218.** Comparing component then determines whether the first position is substantially the same as the second position.

As shown in **FIG. 7****,** the position of communication device **202** at time *t₁* is *P*(*t₁*), whereas the position of communication device **202** at time *t₂* is *P*(*t₂*). It is clear from graph **702** that *P*(*t₁*) is not equal to, or substantially similar to *P*(*t₂*). Graph **702** models the situation where a crash-similar event, a drastic deceleration, is followed by a pause by the driver, which is then followed by additional movement. In other words, graph **702** models a situation where there was no vehicle crash.

Returning to **FIG. 6****,** if it is determined that the first position is substantially the same as the second position **(Y** at **S614),** a crash signal is generated **(S616).**

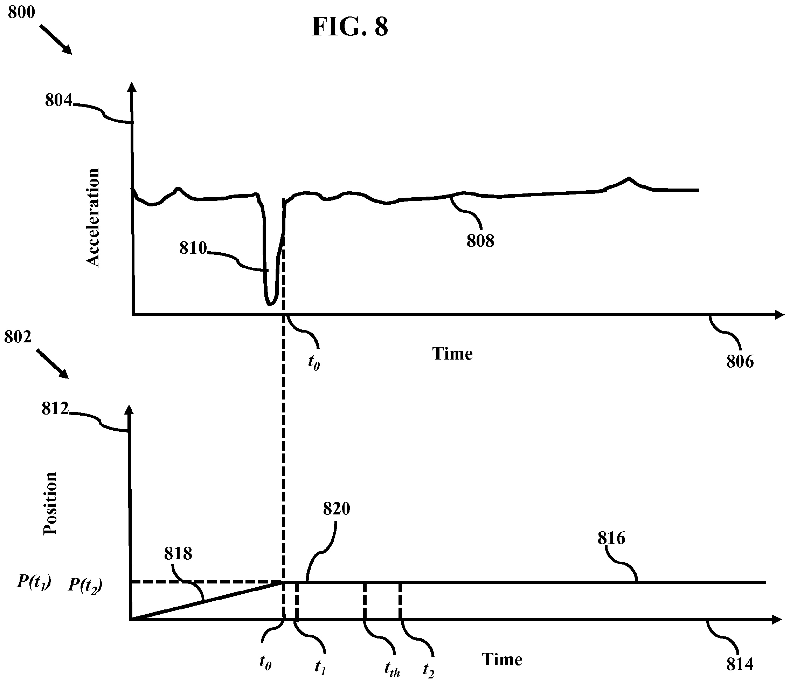

**FIG. 8** illustrates a graph **800** of acceleration as a function of time of a communication device within a vehicle and a graph **802** of position as a function of time of the communication device within a vehicle during another example situation.

Graph **802** has a y-axis **812** of position, an x-axis **814** of time and a function **816.** Function **816** includes a rising portion **818** until time to and a flat portion **820** after time *t₀*.

As shown in **FIG. 8****,** the position of communication device **202** at time *t₁* is *P*(*t₁*)*,* which is the same position at time *t₂* is *P*(*t₂*). It is clear from graph **802** that *P*(*t₁*) is equal to *P*(*t₂*). Graph **802** models the situation where a crash-similar event, a drastic deceleration, is followed by more than just pause by the driver, and is not followed by additional movement. In other words, graph **802** models a situation where there was a vehicle crash.

When comparing component **218** determines that the position of communication device **202** is substantially the same after the predetermined time threshold comparing component generates a crash mode signal for identifier **240.** Identifier **240** provides the crash mode signal to controller **228,** which may then provide notification network **208** via communication component **224.**

Returning to **FIG. 6****,** after the crash signal is generated **(S616),** method **600** stops **(S618).**

Conventional crash detection systems may constantly monitor a vehicle's position by way of a GPS system to determine whether a crash has occurred. However, such GPS monitoring is expends a large amount of energy. In accordance with aspects of the present invention, a first triggering parameter associated with a vehicle crash is detected. At that point a positioning system may be tapped to further validate if a crash has occurred. In this manner, many false positives are avoided and much energy is saved.

Aspects of the present invention enable a communication device to accurately determines whether a vehicle as crashed without accessing the OBD of the vehicle. In particular, a communication device in accordance with aspects of the present invention can accurately detect a vehicle crash by detecting that it is in a vehicle, detecting a first parameter associated with a crash, detecting a second parameter associated with a crash, generating a crash probability and comparing the crash probability with a predetermined threshold. By detecting a crash based on being in a vehicle and based on two additionally detected parameters, the likelihood of erroneously detecting a crash is greatly reduced.

In the drawings and specification, there have been disclosed embodiments of the invention and, although specific terms are employed, they are used in a generic and descriptive sense only and not for purposes of limitation, the scope of the invention being set forth in the following claims.

Additional general embodiments can provide following features:
In another embodiment of the non-transitory, tangible, computer-readable media, the computer-readable instructions being capable of being read by a computer and being capable of instructing the computer to perform the method further comprising:
   determining, via a velocity determining component, a first velocity of the device prior to time *to,*
   wherein the mode-determining component is operable to generate the crash mode signal when the determined first velocity is additionally greater than a predetermined threshold.

Preferred, the non-transitory, tangible, computer-readable media, wherein the computer-readable instructions are capable of instructing the computer to perform the method wherein said generating, via the mode-determining component, a crash mode signal when the first position signal corresponds to the second position signal comprises generating the crash mode signal additionally when the difference between *t₁* and *t₂* is greater than a predetermined time threshold.

Especially the non-transitory, tangible, computer-readable media, the computer-readable instructions being capable of being read by a computer and being capable of instructing the computer to perform the method further comprising:
determining, via a velocity determining component, a first velocity of the device prior to time *to,*
wherein the mode-determining component is operable to generate the crash mode signal when the determined first velocity is additionally greater than a predetermined.

Another embodiment of the non-transitory, tangible, computer-readable media, the computer-readable instructions being capable of being read by a computer and being capable of instructing the computer to perform the method wherein said generating, via the mode-determining component, a crash mode signal when the first position signal corresponds to the second position signal comprises generating the crash mode signal additionally when the difference between *t₁* and *t₂* is greater than a predetermined time threshold.

## Claims

1. A smartphone for use with a vehicle, said smartphone comprising:
a mode-determining component operable to generate an in-vehicle signal when said smartphone is within the vehicle;
a triggering parameter detecting component operable to detect a triggering parameter associated with a vehicle crash and to generate a triggering detector signal based on the detected triggering parameter; and
a position detecting component operable to detect whether said smartphone is disposed at a location for a predetermined period of time when said mode-determining component generates the in-vehicle signal and when said triggering parameter detecting component generates the triggering detector signal,
wherein said mode-determining component is further operable to generate a crash mode signal when said position detecting component detects that said smartphone is disposed at the location for the predetermined period of time, when said mode-determining component generates the in-vehicle signal and when said triggering parameter detecting component generates the triggering detector signal.

2. A device for use with a vehicle, said device comprising:
a mode-determining component operable to generate an in-vehicle signal when said device is within the vehicle;
a triggering parameter detecting component operable to detect a triggering parameter associated with a vehicle crash at a first time *t₀* and to generate a triggering detector signal based on the detected triggering parameter; and
a position detecting component operable to detect a first position of said device at a second time *t₁,* to generate a first position signal based on the first detected position, to detect a second position of said device at a third time *t₂* and to generate a second position signal based on the second detected position when said mode-determining component generates the in-vehicle signal and when said triggering parameter detecting component generates the triggering detector signal,
wherein said mode-determining component is further operable to generate a crash mode signal when the first position signal corresponds to the second position signal.

3. The device of claim 2, wherein said triggering parameter detecting component is operable to detect, as the triggering parameter, one of the group consisting of magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof.

4. The device of claim 3, further comprising:
a velocity determining component operable to determine a first velocity of said device prior to time *t₀,*
wherein said mode-determining component is operable to generate the crash mode signal when the determined first velocity is additionally greater than a predetermined threshold.

5. The device of claim 4, wherein said mode-determining component is operable to generate the crash mode signal additionally when the difference between *t₁* and *t₂* is greater than a predetermined time threshold.

6. The device of claim 2, further comprising:
a velocity determining component operable to determine a first velocity of said device prior to time *t₀,*
wherein said mode-determining component is operable to generate the crash mode signal when the determined first velocity is additionally greater than a predetermined threshold.

7. The device of claim 6, wherein said mode-determining component is operable to generate the crash mode signal additionally when the difference between *t₁* and *t₂* is greater than a predetermined time threshold.

8. A method of using a device within a vehicle, said method comprising:
generating, via a mode-determining component, an in-vehicle signal when the device is within the vehicle;
detecting, via a triggering parameter detecting component, a triggering parameter associated with a vehicle crash at a first time to;
generating, via the triggering parameter detecting component, a triggering detector signal based on the detected triggering parameter;
detecting, via a position detecting component, a first position of the device at a second time *ti,* when the mode-determining component generates the in-vehicle signal and when the triggering parameter detecting component generates the triggering detector signal;
generating, via the position detecting component, a first position signal based on the first detected position;
detecting, via the position detecting component, a second position of the device at a third time *t₂*, when the mode-determining component generates the in-vehicle signal and when the triggering parameter detecting component generates the triggering detector signal;
generating, via the position detecting component, a second position signal based on the second detected position; and
generating, via the mode-determining component, a crash mode signal when the first position signal corresponds to the second position signal.

9. The method of claim 8, wherein said detecting, via a triggering parameter detecting component, a triggering parameter associated with a vehicle crash at a first time *t₀* comprises detecting, as the triggering parameter, one of the group consisting of magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof.

10. The method of claim 9, further comprising:
determining, via a velocity determining component, a first velocity of the device prior to time *t₀,*
wherein the mode-determining component is operable to generate the crash mode signal when the determined first velocity is additionally greater than a predetermined threshold.

11. The method of claim 10, wherein said generating, via the mode-determining component, a crash mode signal when the first position signal corresponds to the second position signal comprises generating the crash mode signal additionally when the difference between *t₁* and *t₂* is greater than a predetermined time threshold.

12. The method of claim 8, further comprising:
determining, via a velocity determining component, a first velocity of the device prior to time *t₀,*
wherein the mode-determining component is operable to generate the crash mode signal when the determined first velocity is additionally greater than a predetermined threshold.

13. The method of claim 12, wherein said generating, via the mode-determining component, a crash mode signal when the first position signal corresponds to the second position signal comprises generating the crash mode signal additionally when the difference between *t₁* and *t₂* is greater than a predetermined time threshold.

14. A non-transitory, tangible, computer-readable media having computer-readable instructions stored thereon, for use with a device within a vehicle, the computer-readable instructions being capable of being read by a computer and being capable of instructing the computer to perform the method comprising:
generating, via a mode-determining component, an in-vehicle signal when the device is within the vehicle;
detecting, via a triggering parameter detecting component, a triggering parameter associated with a vehicle crash at a first time *t₀*;
generating, via the triggering parameter detecting component, a triggering detector signal based on the detected triggering parameter;
detecting, via a position detecting component, a first position of the device at a second time *t₁,* when the mode-determining component generates the in-vehicle signal and when the triggering parameter detecting component generates the triggering detector signal;
generating, via the position detecting component, a first position signal based on the first detected position;
detecting, via the position detecting component, a second position of the device at a third time t₂, when the mode-determining component generates the in-vehicle signal and when the triggering parameter detecting component generates the triggering detector signal;
generating, via the position detecting component, a second position signal based on the second detected position; and
generating, via the mode-determining component, a crash mode signal when the first position signal corresponds to the second position signal.

15. The non-transitory, tangible, computer-readable media of claim 14, wherein the computer-readable instructions are capable of instructing the computer to perform the method such that wherein said detecting, via a triggering parameter detecting component, a triggering parameter associated with a vehicle crash at a first time *t₀* comprises detecting, as the triggering parameter, one of the group consisting of magnetic fields in any of three dimensions, electric fields in any of three dimensions, electro-magnetic fields in any of three dimensions, velocity in any of three dimensions, acceleration in any of three dimensions, angular velocity in any of three dimensions, angular acceleration in any of three dimensions, geodetic position, sound, temperature, vibrations in any of three dimensions, pressure in any of three dimensions, biometrics, contents of surrounding atmosphere, a change in electric fields in any of three dimensions, a change in magnetic fields in any of three dimensions, a change in electro-magnetic fields in any of three dimensions, a change in velocity in any of three dimensions, a change in acceleration in any of three dimensions, a change in angular velocity in any of three dimensions, a change in angular acceleration in any of three dimensions, a change in geodetic position in any of three dimensions, a change in sound, a change in temperature, a change in vibrations in any of three dimensions, a change in pressure in any of three dimensions, a change in biometrics, a change in contents of surrounding atmosphere and combinations thereof.
